(19) Europäisches Patentamt
European Patent Office
Office européen des brevets

(11) **EP 3 308 110 B1**

(12) **EUROPÄISCHE PATENTSCHRIFT**

(45) Veröffentlichungstag und Bekanntmachung des Hinweises auf die Patenterteilung:
**27.01.2021** **Patentblatt 2021/04**

(21) Anmeldenummer: **16724886.3**

(22) Anmeldetag: **23.05.2016**

(51) Int Cl.:
*G01F 23/284* (2006.01)    *G01F 25/00* (2006.01)

(86) Internationale Anmeldenummer:
**PCT/EP2016/061580**

(87) Internationale Veröffentlichungsnummer:
**WO 2016/202531 (22.12.2016 Gazette 2016/51)**

(54) **VERFAHREN UND VORRICHTUNG ZUR ÜBERPRÜFUNG DER FUNKTIONSFÄHIGKEIT EINES RADAR-BASIERTEN FÜLLSTANDSMESSGERÄTS**

METHOD AND DEVICE FOR TESTING THE FUNCTIONALITY OF A RADAR-BASED FILL STATE MEASURING DEVICE

PROCÉDÉ ET DISPOSITIF POUR CONTRÔLER LA FONCTIONNALITÉ D'UN APPAREIL DE MESURE DU NIVEAU DE REMPLISSAGE BASÉ SUR UN RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2015   DE 102015109463**

(43) Veröffentlichungstag der Anmeldung:
**18.04.2018   Patentblatt 2018/16**

(73) Patentinhaber: **Endress+Hauser SE+Co. KG**
**79689 Maulburg (DE)**

(72) Erfinder:
• DAUFELD, Ghislain
  68128 Village Neuf (FR)
• MERLE, Jens
  79650 Schopfheim (DE)
• VOGEL, Markus
  79688 Hausen i.W. (DE)
• MALINOVSKIY, Alexey
  79689 Maulburg (DE)
• GORENFLO, Stefan
  79688 Hausen (DE)

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
WO-A1-2010/034574      DE-T5-112006 000 734
US-A- 4 044 355          US-A1- 2012 279 283

**Beschreibung**

Die Erfindung betrifft ein Verfahren zur Überprüfung der Funktionsfähigkeit eines Radar-basierten Füllstandsmessgeräts, welches zur Messung des Füllstands eines in einem Behälter befindlichen Füllguts dient, sowie ein zur Ausführung dieses Verfahrens geeignetes Füllstandsmessgerät.

In der Automatisierungstechnik, insbesondere in der Prozessautomatisie-rungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmess-geräten, Durchflussmessgeräten, Druck- und Temperaturmessgeräten, pH-Redoxpotential-Messgeräten, Leitfähigkeitsmessgeräten, usw. integriert sind, welche die entsprechenden Prozessvariablen Füllstand, Durchfluss, Druck, Temperatur, pH-Wert, Redoxpotential bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Komponenten verstanden, die auf der Feldebene angeordnet sind. Eine Vielzahl solcher Feldgeräte wird von der Firma Endress + Hauser hergestellt und vertrieben.

Bei Füllstandsmessgeräten haben sich unter anderem berührungslose Messverfahren etabliert, da sie robust und wartungsarm sind. Ein weiterer Vorteil besteht in der Fähigkeit, den Füllstand kontinuierlich, also mit einer quasi unendlich hohen Auflösung messen zu können. Daher werden im Bereich der kontinuierlichen Füllstandsmessung vorwiegend Radar-basierte Messverfahren eingesetzt. Ein etabliertes Messprinzip bildet hierbei das Laufzeit-Messprinzip, es ist auch unter dem Namen Pulsradar bekannt. Hierbei wird ein Radar-Signalpuls in Richtung des Füllguts ausgesandt und die Laufzeit bis zum Empfang des Echo-Signals gemessen. Durch das Messprinzip können Pulsradar-basierte Füllstandsmessgeräte vergleichsweise ohne großen schaltungstechnischen Aufwand realisiert werden. Allerdings ist das Auflösungsvermögen dieses Messgeräte-Typs begrenzt. Dies hängt damit zusammen, dass die ausgesandten Mikrowellen-Signalpulse nicht infinitesimal kurz sein können. Somit reduziert sich die Messgenauigkeit der Laufzeit und folglich die des Füllstands.

Im Bereich des Pulsradars gibt es verschiedenste Ansätze, diese Einschränkung zu überwinden. Viele der Ansätze zielen darauf ab, zusätzliche Phaseninformationen aus dem Puls selbst zu erhalten, um die Laufzeit genauer bestimmen zu können. Ein solcher Ansatz, bei dem die Phaseninformation statistisch erfasst wird, um eine Aussage über den genauen Zeitpunkt des Puls-Maximums treffen zu können, ist in der Offenlegungsschrift WO2013/092099A1 beschrieben. Ansätze, die in diese Richtung gehen, erfordern jedoch eine komplexere Auswertungs-Schaltung. Hierdurch geht der eigentliche Vorteil des Pulsradar-Verfahrens, nämlich die Möglichkeit zur aufwandsarmen schaltungstechnischen Realisierung verloren.

Sofern eine komplexere Schaltungstechnik in Kauf genommen werden kann, bietet sich zur Radar-basierten Füllstandsmessung auch FMCW als Messprinzip an, welches Prinzip-bedingt eine höhere Auflösung ermöglicht. Das Messprinzip von FMCW-basierten Radar-Entfernungsmessverfahren ist in WO2010/034574 offenbart und beruht darauf, dass ein hochfrequentes Mikrowellensignal kontinuierlich ausgesendet wird. Dabei liegt die Frequenz des Signals in einem festgelegten Frequenzband im Bereich einer standarisierten Grundfrequenz ($f_0$). Standardmäßig werden hier Frequenzbänder im 6 GHz-Bereich, dem 26 GHz, oder dem 79 GHz-Bereich verwendet. Kennzeichnend für das FMCW Verfahren ist hierbei, dass die Sende-Frequenz nicht konstant ist, sondern sich periodisch innerhalb des Frequenzbandes ändert. Die Änderung kann hierbei linear sein und eine Sägezahnbeziehungsweise Dreiecks-Form aufweisen, eine Sinus-Förmige Änderung kann je nach Anwendung jedoch auch verwendet werden.

Wie beim Pulsradar besteht auch beim FMCW-basierten Füllstands-Messverfahren eine besondere Herausforderung darin, das Messsignal zweifelsfrei gegenüber Störsignalen zu erkennen. Hierdurch können fehlerhafte Messwerte generiert werden, anhand derer die Funktionsfähigkeit des Füllstandsmessgeräts beeinträchtigt wird. Eine wesentliche Ursache ist hierbei der Empfang von Störecho-Signalen, die nicht an der Oberfläche des Füllguts entstehen, sondern durch Reflektion des Sende-Signals an Störkörpern, wie Rührwerken oder Einbauten im Behälter hervorgerufen werden.

Mittlerweile existieren viele technische Ansätze, um diese Art von Störecho-Signalen zu identifizieren, beziehungsweise zu filtern. So ist aus der WO 2012/139852 A1 ein Verfahren zur Kalibration von FMCW-basierten Füllstandsmessgeräten bekannt, bei dem mittels eines schwingenden Referenzreflektors, der zwischen Messgerät und Füllgut positioniert ist, ein eindeutiges Kalibrier-Signal generiert wird.

Neben denjenigen Störecho-Signalen, die durch Reflektion des Sende-Signals entstehen, gibt es jedoch auch andere Arten an Störsignalen, die sich unmittelbar auf die Empfangs-Elektronik des Füllstandsmessgeräts auswirken. Hierzu zählt unter anderem von außen eindringende elektromagnetische Stör-Strahlung. Eine weitere Ursache für solch eine Art von Störsignalen können aber auch defekte Hochfrequenzkomponenten im Füllstandsmessgerät selbst sein. Dies ist besonders sicherheitsrelevant, wenn hierdurch ein vermeintlich gültiges Empfangssignal erkannt wird, so dass ein dementsprechend falscher Füllstandsmesswert ausgegeben wird.

Heutige Sicherheitsbestimmungen fordern, dass Füllstandsmessgeräte bei Vorhandensein eines solchen Fehlers selbst erkennen, dass sie nicht funktionsfähig sind. Solch eine Vorgabe ist unter anderem in den Normen DIN EN 61511/61508, in denen ein einzuhaltender "Safety Integrity Level" (SIL) definiert ist, genannt.

Der Erfindung liegt daher die Aufgabe zugrunde, ein Verfahren bereitzustellen, mit dem die Funktionsfähigkeit von FMCW-basierten Füllstandsmessgeräten überprüft werden kann.

Die Erfindung löst diese Aufgabe durch ein Verfahren zur Überprüfung der Funktionsfähigkeit eines Radar-basierten Füllstandsmessgeräts, welches zur Messung des Füllstands (L) eines in einem Behälter befindlichen Füllguts dient. Das Verfahren umfasst dabei folgende Verfahrensschritte:

Im Messbetrieb wird

- mittels eines ersten periodischen elektrischen Signals ($s_1$) ein erstes Mikrowellen-Signal ($S_1$) erzeugt, wobei das erste elektrische Signal ($s_1$) im Bereich einer Grundfrequenz ($f_0$) eine in etwa konstante erste Frequenzänderung ($f'_1$) aufweist,
- das erste Mikrowellen-Signal ($S_1$) in Richtung der Oberfläche des Füllguts ausgesendet,
- ein erstes Echo-Signal ($E_1$), welches durch Reflektion des ersten Mikrowellen-Signals ($S_1$) erzeugt wird, empfangen und in ein erstes elektrisches Empfangs-Signal ($e_1$) umgewandelt,
- durch Mischen des ersten Empfangs-Signals ($e_1$) mit dem ersten elektrischen Signal ($s_1$) ein erstes Differenz-Signal ($ZF_1$) erzeugt,
- die Frequenz ($f_1$) des ersten Differenz-Signals ($ZF_1$) ermittelt,
- anhand der Frequenz ($f_1$) des ersten Differenz-Signals ($ZF_1$) der Füllstand (L) bestimmt.

Zur Überprüfung der Funktionsfähigkeit wird zusätzlich

- mittels eines zweiten periodischen elektrischen Signals ($s_2$) ein zweites Mikrowellen-Signal ($S_2$) erzeugt, wobei das zweite elektrische Signal ($s_2$) im Bereich der Grundfrequenz ($f_0$) eine zweite in etwa konstante Frequenzänderung ($f'_2$), welche sich von der ersten Frequenzänderung ($f'_1$) unterscheidet, aufweist,
- das zweite Mikrowellen-Signal ($S_2$) in Richtung der Oberfläche des Füllguts ausgesendet,
- ein zweites Echo-Signal ($E_2$), welches durch Reflektion des zweiten Mikrowellen-Signals ($S_2$) erzeugt wird, empfangen und in ein zweites elektrisches Empfangs-Signal ($e_2$) umgewandelt,

- durch Mischen des zweiten Empfangs-Signals ($e_2$) mit dem zweiten elektrischen Signal ($s_2$) ein zweites Differenz-Signal ($ZF_2$) erzeugt,
- die Frequenz ($f_2$) des zweiten Differenz-Signals ($ZF_2$) ermittelt,
- geprüft, ob die Frequenz ($f_2$) des zweiten Differenz-Signals ($ZF_2$) mit einer Referenz-Frequenz ($f_p$) übereinstimmt, wobei die Referenz-Frequenz ($f_p$) einen vorbestimmten Wert im Vergleich zur Frequenz ($f_1$) des ersten Differenz-Signals ($ZF_1$) aufweist,
- für den Fall, dass die Frequenz ($f_2$) des zweiten Differenz-Signals ($ZF_2$) nicht mit der vorbestimmten Frequenz ($f_p$) übereinstimmt, das Messgerät als nicht funktionsfähig eingestuft.

Mit dem Verfahren wird also geprüft, ob eine von der ersten Frequenzänderung ($f'_1$) abweichende zweite Frequenzänderung ($f'_2$) bei einem funktionierenden Füllstandsmessgerät eine definiert verschobene Frequenz ($f_2$) des zweiten Differenz-Signals ($ZF_2$) bewirkt. Ist dies nicht der Fall, so ist das verarbeitete Empfangs-Signal ($e_1$, $e_2$) nicht durch ein Echo-Signal ($E_1$, $E_2$) verursacht worden und es ist von einem funktionsunfähigen Feldgerät auszugehen. Die Berechnung der Verschiebung, die zur Überprüfung als Referenz-Frequenz ($f_p$) dient, ergibt sich aus den voneinander abweichenden Frequenzänderungen ($f'_1$, $f'_2$):

$$f_p = \left( \frac{f'_2 * f_1}{f'_1} \right)$$

Für den Fall, dass bei Überprüfung der Funktionsfähigkeit die Frequenz ($f_2$) des zweiten Differenz-Signals ($ZF_2$) eindeutig von der Referenz-Frequenz ($f_p$) abweicht, ist davon auszugehen, dass das Füllstandsmessgerät nicht funktionsfähig ist.

Eine vorteilhafte Ausgestaltungsform sieht vor, dass die Überprüfung der Funktionsfähigkeit in vordefinierten Intervallen während des Messbetriebs durchgeführt wird. Hierdurch wird eine regelmäßige Überprüfung der Funktionsfähigkeit gewährlistet, wobei die Intervall-Länge entsprechend der jeweiligen Sicherheitsanforderung gewählt werden kann.

In einer weiterführenden Form des Verfahrens werden/wird das erste Differenz-Signal ($ZF_1$) und/oder das zweite Differenz-Signal ($ZF_2$) durch einen Analog/Digital-Wandler digitalisiert. Hierdurch kann eine vereinfachte Weiterverarbeitung der Differenz-Signale ($ZF_1$, $ZF_2$) auf digitaler Basis durchgeführt werden.

Eine Variante des Verfahrens sieht vor, dass die Frequenzänderung ($f'_1$) des ersten elektrischen Signals ($s_1$) einem in etwa ganzzahligen Vielfachen der zweiten Frequenzänderung ($f'_2$) entspricht. Dies erleichtert die Berechnung der Referenz-Frequenz, die anhand der oben genannten Formel berechnet wird.

In einer bevorzugten Durchführung des Verfah-

rens wird die Frequenz ($f_1$) des ersten Differenz-Signals ($ZF_1$) durch eine Fourier-Transformation des ersten Differenz-Signals ($ZF_1$) ermittelt. Fourier-Transformationen können schaltungstechnisch mit vertretbarem Aufwand durchgeführt werden. Hierbei kann prinzipiell jede Form der Fourier-Transformation genutzt werden, beispielsweise diskrete Fourier-Transformation (DFT). Einen besonders geringen Rechenaufwand erzeugt jedoch eine schnelle Fourier Transformation (im Englischen: Fast Fourier Transformation, FFT).

Dementsprechend ist es auch vorteilhaft, wenn die Frequenz ($f_2$) des zweiten Differenz-Signals ($ZF_2$) durch eine Fourier-Transformation des zweiten Differenz-Signals ($ZF_2$) ermittelt wird.

Eine bevorzugte Variante des Verfahrens sieht vor, dass die Frequenzänderungen ($f'_1$, $f'_2$) durch sägezahnförmige Anregung der elektrischen Signale ($s_1$, $s_2$) erzeugt werden. Hierbei lässt es die Erfindung prinzipiell zu, dass die Frequenzänderungen ($f'_1$, $f'_2$) sowohl positiv als auch negativ sind. Ebenso können die elektrischen Signale ($s_1$, $s_2$) erfindungsgemäß eine voneinander abweichende Periodizität aufweisen. Darüber hinaus können erfindungsgemäß beide der Frequenzänderungen ($f'_1$, $f'_2$) den größeren Wert im Vergleich zur jeweils anderen Frequenzänderung ($f'_1$, $f'_2$) aufweisen.

Alternativ zur letztgenannten Variante des Verfahrens können die Frequenzänderungen ($f'_1$, $f'_2$) durch dreiecksförmige Anregung der elektrischen Signale ($s_1$, $s_2$) erzeugt werden. Auch bei dieser Form der Anregung bietet die Erfindung die Wahl, ob die elektrischen Signale ($s_1$, $s_2$) dieselbe Periodizität bei der dreiecksförmigen Anregung aufweisen, solange die Anregung im Bereich der Grundfrequenz $f_0$ liegt.

Darüber hinaus löst die Erfindung die ihr gestellte Aufgabe durch ein Füllstandsmessgerät zur Durchführung des in zumindest einem der vorhergehenden Ansprüche beschriebenen Verfahrens. Dafür umfasst das Füllstandsmessgerät folgende Komponenten:

- Eine Signalerzeugungseinheit zur Erzeugung der elektrischen Signale ($s_1$, $s_2$),
- eine Antenneneinheit zum Senden der Mikrowellen-Signale ($S_1$, $S_2$) und/oder zum Empfangen der Echo-Signale ($E_1$, $E_2$),
- einen Mischer zum Mischen der elektrischen Signale ($s_1$, $s_2$, $e_1$, $e_2$),
- eine Auswerte-Einheit zur Bestimmung des Füllstandes (L) und/oder zur Überprüfung der Funktionsfähigkeit des Füllstandsmessgeräts.

Die aufgezählten Einheiten lassen sich in unterschiedlichen Varianten ausführen. Hierbei ist auch eingeschlossen, dass mehrere der genannten Einheiten in einer einzigen schaltungstechnischen Komponente realisiert sind.

Eine weiterführende Ausgestaltungsform sieht vor, dass die Auswerte-Einheit einen Bandpass umfasst, der für die Frequenzen ($f_1$, $f_2$) der Differenz-Signale ($ZF_1$, $ZF_2$) durchlässig ist. Hierdurch werden mögliche Neben-Frequenzen, die nicht dem Füllstand (L) zuzuordnen sind, unterdrückt und vereinfachen dadurch die Ermittlung der Frequenzen ($f_1$, $f_2$) der Differenz-Signale ($ZF_1$, $ZF_2$).

Entsprechend einer vorteilhaften Ausgestaltung des Füllstandsmessgeräts umfasst die Auswerte-Einheit einen Verstärker zur Verstärkung der Differenz-Signale ($ZF_1$, $ZF_2$). Auch diese Ausgestaltung bewirkt bei entsprechender Wahl des Verstärkungsfaktors eine vereinfachte Ermittlung der Frequenzen ($f_1$, $f_2$) der Differenz-Signale ($ZF_1$, $ZF_2$).

Die Erfindung wird anhand der nachfolgenden Figuren erläutert. Es zeigt:

     Fig. 1: ein Füllstandsmessgerät zur Ausführung des erfindungsgemäßen Verfahrens,

     Fig. 2a: eine sägezahnförmige Anregung der elektrischen Signale $s_1$ und $s_2$,

     Fig. 2b: eine dreiecksförmige Anregung der elektrischen Signale $s_1$ und $s_2$,

     Fig. 3a: ein Frequenzspektrum der Differenz-Signale $ZF_1$ und $ZF_2$, bei dem die Frequenz $f_2$ des zweiten Differenz-Signals $ZF_2$ mit der Referenz-Frequenz $f_p$ übereinstimmt, und

     Fig. 3b: ein Frequenzspektrum der Differenz-Signale $ZF_1$ und $ZF_2$, bei dem die Frequenz $f_2$ des zweiten Differenz-Signals $ZF_2$ nicht mit der Referenz-Frequenz $f_p$ übereinstimmt.

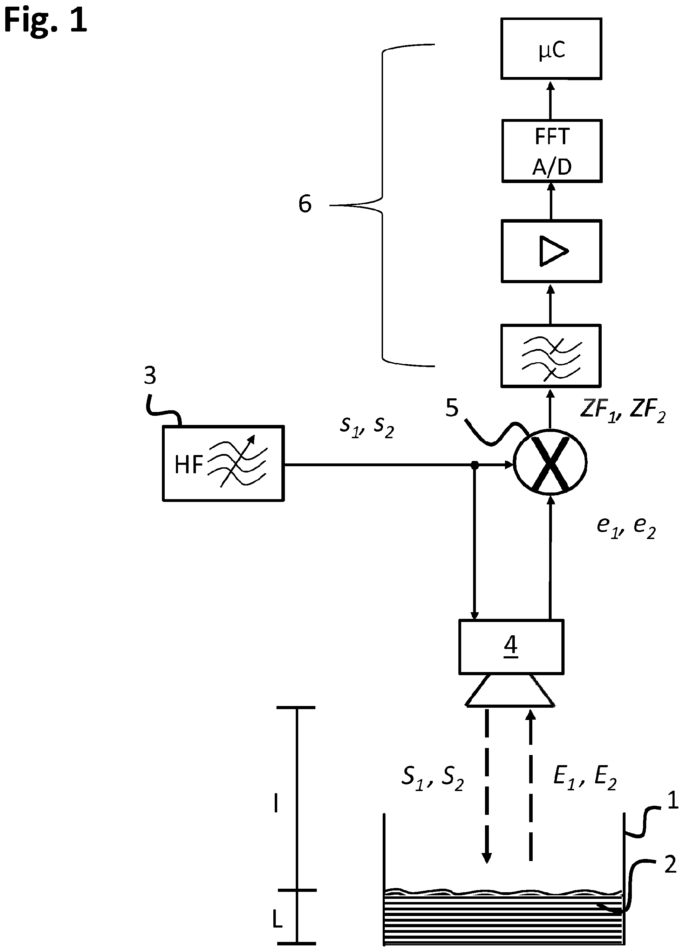

In Fig. 1 ist ein Füllstandsmessgerät dargestellt, welches zur Durchführung des erfindungsgemäßen Verfahrens geeignet ist und dementsprechend in der Lage ist, seine Funktionsfähigkeit zu überprüfen. Das dargestellte Füllstandsmessgerät basiert auf einem für FMCW-basierte Füllstandsmessgeräte üblichen Aufbau. Verantwortlich für die Erzeugung von Mikrowellen-Signalen $S_1$ und $S_2$ ist eine Signalerzeugungseinheit 3. Sie erzeugt für FMCW typische elektrische Signale $s_1$ und $s_2$, welche sich im Bereich einer Grundfrequenz $f_0$ im GHz-Bereich befinden und konstante Frequenzänderungen $f'_1$, $f'_2$ aufweisen. Im Messbetrieb erzeugt die Signalerzeugungseinheit 3 ausschließlich ein erstes elektrisches Signal $s_1$ mit einer ersten konstanten Frequenzänderung $f'_1$. Zur Überprüfung der Funktionsfähigkeit des Füllstandsmessgeräts wird anstelle des ersten Signals $s_1$ ein zweites elektrisches Signal $s_2$ erzeugt, welches eine von der ersten Frequenzänderung $f'_1$ abweichende zweite Frequenzänderung $f'_2$ aufweist. Hierbei hängt es von der Steuerung der Signalerzeugungseinheit 3 ab, in welchen Intervallen die Überprüfung durchgeführt wird.

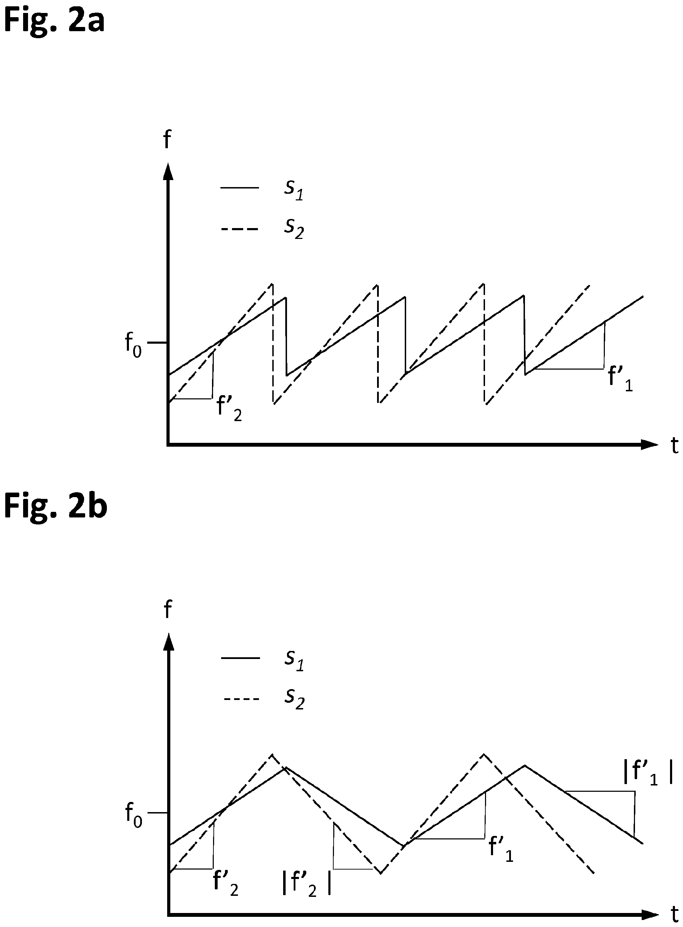

Bei der Signalerzeugungseinheit 3 kann es sich beispielsweise um einen spannungsgesteuerten Oszillator handeln, der einen hierfür geeigneten Schwingquarz umfasst. Erfindungsgemäß ist die Signalerzeugungseinheit 3 dazu geeignet, Signale $s_1$ und $s_2$ mit sich unterscheidenden Frequenzänderungen $f'_1$, $f'_2$ zu erzeugen. Mögliche charakteristische Formen der Anregung, mit denen die Signalerzeugungseinheit 3 die elektrischen Signale $s_1$ und $s_2$ erzeugt, sind in Fig.2a und Fig. 2b dargestellt.

In Fig. 2a ist eine sägezahnförmige Anregung der elektrischen Signale $s_1$ und $s_2$ dargestellt. Es zeigt, dass bei der sägezahnförmigen Anregung die Frequenzänderungen $f'_1$ und $f'_2$ zum einen linear sind und zum anderen eine zeitlich zunehmende Frequenz aufweisen. Eine sägezahnförmige Anregung mit zeitlich abnehmender Frequenz ist erfindungsgemäß jedoch auch denkbar. Die Periodizitäten der elektrischen Signale $s_1$ und $s_2$ sind in Fig. 2a leicht voneinander abweichend. Eine Übereinstimmung der Periodizitäten ist erfindungsgemäß nicht notwendig. Vorteilhaft ist jedoch, wenn die Periodizitäten zumindest in der gleichen Größenordnung liegen.

Eine mögliche alternative Anregungsform der elektrischen Signale $s_1$ und $s_2$ ist in Fig. 2b dargestellt. Hier erfolgt die Anregung mit dreiecksförmigen Frequenzänderungen $f'_1$ und $f'_2$. Hierbei ist die Frequenzänderung $f'_1$ oder $f'_2$ in dem Teil der Periode, in dem die Frequenz zunimmt, vom Betrag $|f'_1|$ oder $|f'_2|$ jeweils gleich, wie in dem Teil der Periode, in dem die Frequenz abnimmt. Auch die in Fig. 2b gezeigten dreiecksförmigen Anregungen der elektrischen Signale $s_1$ und $s_2$ weisen keine exakt gleiche Periodizität auf. Wie bei sägezahnförmiger Anregung ist es jedoch auch bei dreiecksförmiger Anregung vorteilhaft, wenn die Periodizitäten der elektrischen Signale $s_1$ und $s_2$ in der gleichen Größenordnung liegen oder sogar gleich sind.

In dem Füllstandsmessgerät, welches in Fig. 1 gezeigt wird, werden mittels der elektrischen Signale $s_1$ und $s_2$ in einer Antenneneinheit 4 Mikrowellen-Signale $S_1$ und $S_2$ erzeugt, wobei die Mikrowellen-Signale $S_1$ und $S_2$ in Richtung eines in einem Behälter 1 befindlichen Füllguts 2 gesendet werden. Entsprechend der elektrischen Signale $s_1$ und $s_2$ weisen auch die Mikrowellen-Signale $S_1$ und $S_2$ die in Fig. 2a oder Fig. 2b gezeigten charakteristischen Frequenzeigenschaften auf. In Fig. 1 ist dargestellt, dass die Antenneneinheit 4 neben der Erzeugung der Mikrowellen-Signale $S_1$ und $S_2$ auch Echo-Signale $E_1$ und $E_2$, die durch Reflektion der Mikrowellen-Signale $S_1$ und $S_2$ an der Oberfläche des Füllguts 2 entstehen, empfängt. Alternativ zur gezeigten Darstellung könnte dies erfindungsgemäß auch über eine separate Empfangsantenne geschehen.

Die Echo-Signale $E_1$ und $E_2$ werden durch die Antenneneinheit 4 in elektrische Empfangs-Signale $e_1$ und $e_2$ umgewandelt. Im Messbetrieb wird dann das Empfangs-Signal $e_1$ in einem Mischer 5 mit dem Sende-Signal $s_1$ gemischt. Dementsprechend wird bei Überprüfung der Funktionsfähigkeit das Empfangs-Signal $e_2$ mit dem Sende-Signal $s_2$ gemischt.

Durch das Mischen der Empfangs-Signale $e_1$ oder $e_2$ mit den Sende-Signalen $s_1$ oder $s_2$ entstehen Differenz-Signale $ZF_1$ bzw. $ZF_2$, wobei die jeweilige charakteristische Frequenz $f_1$, $f_2$ der Differenz-Signale $ZF_1$ bzw. $ZF_2$ aus den Frequenz-Differenzen zwischen der momentanen Frequenz des Sende-Signals $s_1$ bzw. $s_2$ und der momentanen Frequenz des Empfangssignals $e_1$ bzw. $e_2$ resultiert.

Zur Ermittlung der Frequenzen $f_1$, $f_2$ der Differenz-Signale $ZF_1$ und $ZF_2$ umfasst das Füllstandsmessgerät eine Auswerte-Einheit 6. Die Ermittlung wird hierbei per Fast-Fourier-Transformation durch eine hierfür vorgesehene Recheneinheit durchgeführt. Wie bei der Verarbeitung solcher Daten üblich, geschieht dies auf der Basis digitaler Daten. Daher ist bei der in Fig. 1 dargestellten Auswerte-Einheit 6 der Fast-Fourier-Transformation ein Analog-/Digital-Wandler vorgeschaltet. Ebenfalls umfasst die Auswerte-Einheit 6, wie bei FMCW-basierten Füllstandsmessgeräten standardmäßig, einen Signal-Verstärker sowie einen Bandpass-Filter, wobei der Bandpass-Filter für die Frequenzen $f_1$ und $f_2$ der Differenz-Signale $ZF_1$ und $ZF_2$ durchlässig ist. Hierdurch wird bewirkt, dass in dem Frequenzspektrum, welches durch die Fast-Fourier-Transformation erhalten wird, die Frequenzen $f_1$ bzw. $f_2$ möglichst signifikant enthalten sind. Aus den gewonnenen Frequenzspektren der Differenz-Signale $ZF_1$ und $ZF_2$ lässt sich ableiten, ob das Füllstandsmessgerät funktionsfähig ist.

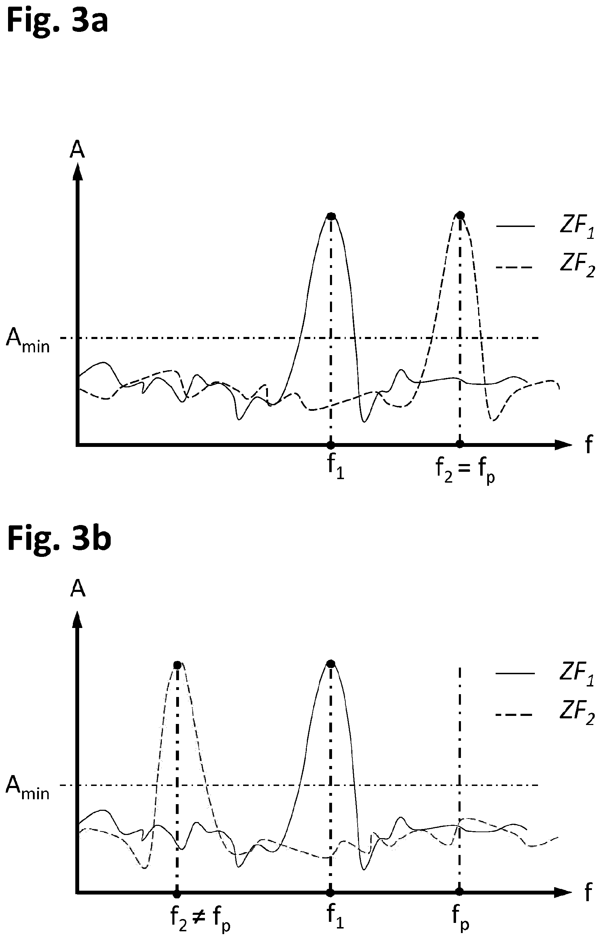

Zwei schematische Frequenzspektren, die nach Durchführung der Fast-Fourier-Transformation resultieren, sind in Fig. 3a und Fig. 3b dargestellt, wobei das Füllstandsmessgerät im Fall von den in Fig. 3b dargestellten Frequenzspektren nicht funktionsfähig ist. In beiden Figuren (Fig. 3a und Fig. 3b) enthalten die Frequenzspektren sowohl ein Spektrum des Differenz-Signals $ZF_1$, welches im Messbetrieb erhalten wird, als auch ein Spektrum des Differenz-Signals $ZF_2$ welches bei der Überprüfung der Funktionsfähigkeit erhalten wird. Jedes der Differenz-Signale $ZF_1$ beziehungsweise $ZF_2$ weist ein charakteristisches Maximum auf, welches der jeweiligen Differenz-Frequenz $f_1$, $f_2$ zugeordnet wird. In den in Fig. 3a dargestellten Frequenzspektren stimmt die Frequenz $f_2$ des Differenz-Signals $ZF_2$ mit der Referenz-Frequenz $f_p$ überein, während dies in Fig. 3b nicht der Fall ist. Hieraus wird erfindungsgemäß abgeleitet, dass das Füllstandsmessgerät nicht funktionsfähig ist.

Die Bestimmung von $f_1$ und $f_2$ anhand der Frequenzspektren sowie die Überprüfung, ob die Frequenz $f_2$ mit der Referenz-Frequenz $f_p$ übereinstimmt, wird bei dem in Fig. 1 gezeigten Füllstandsmessgerät durch einen Mikrocontroller $\mu C$ durchgeführt, wobei der Mikrocontroller $\mu C$ Bestandteil der Auswerte-Einheit 6 ist. Somit ist es dem Füllstandsmessgerät möglich, seine Funktionsfähigkeit zu überprüfen. Infolgedessen kann beispielsweise an einem Display des Füllstandsmessgeräts angezeigt werden, dass das Gerät nicht funktionsfähig ist, oder diese Information kann an eine übergeordnete Einheit übermittelt werden, so dass sicherheitskritische Füllstände im Behälter 1 durch fehlerhafte Füllstandsmesswerte unterbunden werden.

## Bezugszeichenliste

| | |
|---|---|
| 1 | Behälter |
| 2 | Füllgut |
| 3 | Signalerzeugungseinheit |
| 4 | Antenneneinheit |
| 5 | Mischer |
| 6 | Auswerte-Einheit |
| $E_1$, $E_2$ | Echo-Signale |
| $e_1$, $e_2$ | Empfangs-Signale |
| $f_p$ | Referenz-Frequenz |
| $f_1$, $f_2$ | Frequenzen der Differenz-Signale ($ZF_1$, $ZF_2$) |
| $f'_1$, $f'_2$ | Frequenzänderungen der elektrischen Signale ($s_1$, $s_2$) |
| $f_0$ | Grundfrequenz |
| L | Füllstand |
| $S_1$, $S_2$ | Mikrowellen-Signale |
| $s_1$, $s_2$ | Elektrische Signale |
| $ZF_1$, $ZF_2$ | Differenz-Signale |

## Patentansprüche

**1.** Verfahren zur Überprüfung der Funktionsfähigkeit eines Radar-basierten Füllstandsmessgeräts, welches zur Messung des Füllstands (L) eines in einem Behälter (1) befindlichen Füllguts (2) dient, folgende Verfahrensschritte umfassend:

Im Messbetrieb wird

- mittels eines ersten periodischen elektrischen Signals ($s_1$) ein erstes Mikrowellen-Signal ($S_1$) erzeugt, wobei das erste elektrische Signal ($s_1$) im Bereich einer Grundfrequenz ($f_0$) eine in etwa konstante erste Frequenzänderung ($f'_1$) aufweist,
- das erste Mikrowellen-Signal ($S_1$) in Richtung der Oberfläche des Füllguts (2) ausgesendet,
- ein erstes Echo-Signal ($E_1$), welches durch Reflektion des ersten Mikrowellen-Signals ($S_1$) erzeugt wird, empfangen und in ein erstes elektrisches Empfangs-Signal ($e_1$) umgewandelt,
- durch Mischen des ersten Empfangs-Signals ($e_1$) mit dem ersten elektrischen Signal ($s_1$) ein erstes Differenz-Signal ($ZF_1$) erzeugt,
- die Frequenz ($f_1$) des ersten Differenz-Signals ($ZF_1$) ermittelt,
- anhand der Frequenz ($f_1$) des ersten Differenz-Signals ($ZF_1$) der Füllstand (L) bestimmt,

zur Überprüfung der Funktionsfähigkeit wird zusätzlich

- mittels eines zweiten periodischen elektrischen Signals ($s_2$) ein zweites Mikrowellen-Signal ($S_2$) erzeugt, wobei das zweite elektrische Signal ($s_2$) im Bereich der Grundfrequenz ($f_0$) eine zweite in etwa konstante Frequenzänderung ($f'_2$), welche sich von der ersten Frequenzänderung ($f'_1$) unterscheidet, aufweist,
- das zweite Mikrowellen-Signal ($S_2$) in Richtung der Oberfläche des Füllguts (2) ausgesendet,
- ein zweites Echo-Signal ($E_2$), welches durch Reflektion des zweiten Mikrowellen-Signals ($S_2$) erzeugt wird, empfangen und in ein zweites elektrisches Empfangs-Signal ($e_2$) umgewandelt,
- durch Mischen des zweiten Empfangs-Signals ($e_2$) mit dem zweiten elektrischen Signal ($s_2$) ein zweites Differenz-Signal ($ZF_2$) erzeugt,
- die Frequenz ($f_2$) des zweiten Differenz-Signals ($ZF_2$) ermittelt,
- geprüft, ob die Frequenz ($f_2$) des zweiten Differenz-Signals ($ZF_2$) mit einer Referenz-Frequenz ($f_p$) übereinstimmt, wobei die Referenz-Frequenz ($f_p$) einen vorbestimmten Wert im Vergleich zur Frequenz ($f_1$) des ersten Differenz-Signals ($ZF_1$) aufweist,
- für den Fall, dass die Frequenz ($f_2$) des zweiten Differenz-Signals ($ZF_2$) nicht mit der vorbestimmten Frequenz ($f_p$) übereinstimmt, das Messgerät als nicht funktionsfähig eingestuft.

**2.** Verfahren nach Anspruch 1, bei dem die Überprüfung der Funktionsfähigkeit in vordefinierten Intervallen während des Messbetriebs durchgeführt wird.

**3.** Verfahren nach Anspruch 1 oder 2, bei dem das erste Differenz-Signal ($ZF_1$) und/oder das zweite Differenz-Signal ($ZF_2$) durch einen Analog/Digital-Wandler digitalisiert werden/wird.

**4.** Verfahren nach zumindest einem der vorhergehenden Ansprüche, wobei die Frequenzänderung ($f'_1$) des ersten elektrischen Signals ($s_1$) einem in etwa ganzzahligen Vielfachen der zweiten Frequenzänderung ($f'_2$) entspricht.

**5.** Verfahren nach zumindest einem der Ansprüche 1 bis 4, wobei die Frequenz ($f_1$) des ersten Differenz-Signals ($ZF_1$) durch eine Fourier-Transformation des ersten Differenz-Signals ($ZF_1$) ermittelt wird.

**6.** Verfahren nach zumindest einem der vorhergehenden Ansprüche, wobei die Frequenz ($f_2$) des zweiten Differenz-Signals ($ZF_2$) durch eine Fourier-Transformation des zweiten Differenz-Signals ($ZF_2$) ermittelt wird.

7. Verfahren nach zumindest einem der vorhergehenden Ansprüche, bei dem die Frequenzänderungen ($f'_1$, $f'_2$) durch sägezahnförmige Anregung der elektrischen Signale ($s_1$, $s_2$) erzeugt werden.

8. Verfahren nach zumindest einem der Ansprüche 1 bis 6, bei dem die Frequenzänderungen ($f'_1$, $f'_2$) durch dreiecksförmige Anregung der elektrischen Signale ($s_1$, $s_2$) erzeugt werden.

9. Füllstandsmessgerät, das zur Durchführung des in zumindest einem der vorhergehenden Ansprüche beschriebenen Verfahrens eingerichtet ist, umfassend:

   - eine Signalerzeugungseinheit, die zur Erzeugung der elektrischen Signale ($s_1$, $s_2$) eingerichtet ist,
   - eine Antenneneinheit, die zum Senden der Mikrowellen-Signale ($S_1$, $S_2$) und zum Empfangen der Echo-Signale ($E_1$, $E_2$) eingerichtet ist,
   - einen Mischer, der zum Mischen der elektrischen Signale ($s_1$, $s_2$, $e_1$, $e_2$) eingerichtet ist, und
   - eine Auswerte-Einheit, die zur Bestimmung des Füllstandes (L) und zur Überprüfung der Funktionsfähigkeit des Füllstandsmessgeräts eingerichtet ist.

10. Füllstandsmessgerät nach Anspruch 9, wobei die Auswerte-Einheit (6) einen Bandpass umfasst, der für die Frequenzen ($f_1$, $f_2$) der Differenz-Signale ($ZF_1$, $ZF_2$) durchlässig ist.

11. Füllstandsmessgerät nach zumindest Anspruch 9 oder 10, wobei die Auswerte-Einheit (6) einen Verstärker zur Verstärkung der Differenz-Signale ($ZF_1$, $ZF_2$) umfasst.

**Claims**

1. Procedure for checking the functioning capacity of a radar-based level measuring device, wherein said procedure is designed for the measurement of the level (L) of a medium (2) located in a vessel (1), and wherein said procedure comprises the following steps:

   In the measuring mode,

   - a first microwave signal ($S_1$) is generated by means of a first periodic electrical signal ($s_1$), wherein the first electrical signal ($s_1$) has an approximately constant first frequency change ($f'_1$) in the area of a basic frequency ($f_0$),
   - the first microwave signal ($S_1$) is emitted in the direction of the surface of the medium (2),
   - a first echo signal ($E_1$), which is generated by the reflection of the first microwave signal ($S_1$), is received and converted to a first electric reception signal ($e_1$),
   - a first difference signal ($ZF_1$) is generated by mixing the first reception signal ($e_1$) with the first electric signal ($s_1$),
   - the frequency ($f_1$) of the first difference signal ($ZF_1$) is determined,
   - the level (L) is determined on the basis of the first difference signal ($ZF_1$), Additionally, for the purpose of checking the functioning capacity,
   - a second microwave signal ($S_2$) is generated by means of a second periodic electrical signal ($s_2$), wherein, in the area of the basic frequency (fo), the second periodic electrical signal ($s_2$) has a second approximately constant frequency change ($f'_2$), said change being different from the first frequency change ($f'_1$),
   - the second microwave signal ($S_2$) is emitted in the direction of the surface of the medium (2),
   - a second echo signal ($E_2$), which is generated by the reflection of the second microwave signal ($S_2$), is received and converted to a second electric reception signal (e2),
   - a second difference signal ($ZF_2$) is generated by mixing the second reception signal ($e_2$) with the second electric signal ($s_2$),
   - the frequency ($f_2$) of the first difference signal ($ZF_2$) is determined,
   - a check is performed to determine whether the frequency ($f_2$) of the second difference signal ($ZF_2$) matches a reference frequency ($f_p$), wherein the reference frequency ($f_p$) has a predefined value in relation to the frequency ($f_1$) of the first difference signal ($ZF_1$),

   in the event that the frequency ($f_2$) of the second difference signal ($ZF_2$) does not match the predefined frequency ($f_p$), the measuring device is categorized as non-functioning.

2. Procedure as claimed in Claim 1, wherein the check to determine the functioning capacity is performed at predefined intervals during the measuring mode.

3. Procedure as claimed in Claim 1 or 2, wherein the

first difference signal ($ZF_1$) and/or the second difference signal ($ZF_2$) are/is digitized by an analog/digital converter.

4. Procedure as claimed in at least one of the previous claims, wherein the frequency change ($f'_1$) of the first electric signal ($s_1$) corresponds to an approximately whole-numbered multiple of the second frequency change ($f'_2$).

5. Procedure as claimed in at least one of the Claims 1 to 4, wherein the frequency ($f_1$) of the first difference signal ($ZF_1$) is determined by a Fourier transformation of the first difference signal ($ZF_1$).

6. Procedure as claimed in at least one of the previous claims, wherein the frequency ($f_2$) of the second difference signal ($ZF_2$) is determined by a Fourier transformation of the second difference signal ($ZF_2$).

7. Procedure as claimed in at least one of the previous claims, wherein the changes in frequency ($f'_1$, $f'_2$) are generated by a sawtooth-shaped excitation of the electric signals ($s_1$, $s_2$).

8. Procedure as claimed in at least one of the Claims 1 to 6, wherein the changes in frequency ($f'_1$, $f'_2$) are generated by a triangular excitation of the electric signals ($s_1$, $s_2$).

9. Level measuring device, which is designed to perform the procedure described in at least one of the previous claims, comprising:

   - a signal generation unit, which is designed to generate electric signals ($s_1$, $s_2$);
   - an antenna unit, which is designed to emit the microwave signals ($S_1$, $S_2$) and to receive the echo signals ($E_1$, $E_2$),
   - a mixer, which is designed to mix the electric signals ($s_1$, $s_2$, $\theta_1$, $\theta_2$), and
   - an evaluation unit, which is designed to determine the level (L) and to verify the functioning capacity of the level measuring device.

10. Level measuring device as claimed in Claim 9, wherein the evaluation unit (6) comprises a bandpass which allows the frequencies ($f_1$, $f_2$) of the difference signals ($ZF_1$, $ZF_2$) to pass.

11. Level measuring device as claimed in Claim 9 or 10, wherein the evaluation unit (6) comprises an amplifier for the amplification of the difference signals ($ZF_1$, $ZF_2$).

**Revendications**

1. Procédé destiné à la vérification de la capacité de fonctionnement d'un transmetteur de niveau basé sur un radar, lequel procédé sert à la mesure du niveau (L) d'un produit (2) se trouvant dans un réservoir (1), et lequel procédé comprend les étapes suivantes :

   En mode de mesure,

   - un premier signal micro-ondes ($S_1$) est généré au moyen d'un premier signal électrique périodique ($s_1$), le premier signal électrique périodique ($s_1$) présentant dans la zone d'une fréquence fondamentale ($f_0$) un premier changement de fréquence ($f'_1$) à peu près constant,
   - le premier signal micro-ondes ($S_1$) est émis en direction de la surface du produit (2),
   - un premier signal d'écho ($E_1$), lequel est généré par réflexion du premier signal micro-ondes ($S_1$), est reçu et converti en un premier signal de réception électrique ($e_1$),
   - un premier signal de différence ($ZF_1$) est généré en mélangeant le premier signal de réception ($e_1$) avec le premier signal électrique ($s_1$),
   - la fréquence ($f_1$) du premier signal de différence ($ZF_1$) est déterminée,
   - le niveau (L) est déterminé sur la base du premier signal de différence ($ZF_1$), En outre, en vue de la vérification de la capacité de fonctionnement,
   - un deuxième signal micro-ondes ($S_2$) est généré au moyen d'un deuxième signal électrique périodique ($s_2$), le deuxième signal électrique périodique ($s_2$) présentant dans la zone d'une fréquence fondamentale ($f_0$) un deuxième changement de fréquence ($f'_2$) à peu près constant, lequel changement se distingue du premier changement de fréquence ($f'_1$),
   - le deuxième signal micro-ondes ($S_2$) est émis en direction de la surface du produit (2),
   - un deuxième signal d'écho ($E_2$), lequel est généré par réflexion du deuxième signal micro-ondes ($S_2$), est reçu et converti en un deuxième signal de réception électrique (e2),
   - un deuxième signal de différence ($ZF_2$) est généré en mélangeant le deuxième signal de réception ($e_2$) avec le deuxième signal électrique ($s_2$),
   - la fréquence ($f_2$) du premier signal de différence ($ZF_2$) est déterminée,

- un contrôle a lieu, à savoir si la fréquence ($f_2$) du deuxième signal de différence ($ZF_2$) coïncide avec une fréquence de référence ($f_p$), la fréquence de référence ($f_p$) présentant une valeur prédéfinie par rapport à la fréquence ($f_1$) du premier signal de différence ($ZF_1$),

pour le cas où la fréquence ($f_2$) du deuxième signal de différence ($ZF_2$) ne coïncide pas avec la fréquence ($f_p$) prédéfinie, l'appareil de mesure n'est pas classé comme étant fonctionnel.

**2.** Procédé selon la revendication 1, pour lequel la vérification de la capacité de fonctionnement est réalisée selon des intervalles prédéfinis pendant le mode de mesure.

**3.** Procédé selon la revendication 1 ou 2, pour lequel le premier signal de différence ($ZF_1$) et/ou le deuxième signal de différence ($ZF_2$) sont/est numérisé(s) par un convertisseur analogique-numérique.

**4.** Procédé selon au moins l'une des revendications précédentes, pour lequel le changement de fréquence ($f'_1$) du premier signal électrique ($s_1$) correspond à peu près à un multiple entier du deuxième changement de fréquence ($f'_2$).

**5.** Procédé selon au moins l'une des revendications 1 à 4, pour lequel la fréquence ($f_1$) du premier signal de différence ($ZF_1$) est déterminée par une transformation de Fourier du premier signal de différence ($ZF_1$).

**6.** Procédé selon au moins l'une des revendications précédentes, pour lequel la fréquence ($f_2$) du deuxième signal de différence ($ZF_2$) est déterminée par une transformation de Fourier du deuxième signal de différence ($ZF_2$).

**7.** Procédé selon au moins l'une des revendications précédentes, pour lequel les changements de fréquence ($f'_1$, $f'_2$) sont générés par une excitation en forme de dent de scie des signaux électriques ($s_1$, $s_2$).

**8.** Procédé selon au moins l'une des revendications 1 à 6, pour lequel les changements de fréquence ($f'_1$, $f'_2$) sont générés par une excitation en forme de triangle des signaux électriques ($s_1$, $s_2$).

**9.** Transmetteur de niveau, lequel est conçu pour l'exécution du procédé décrit dans au moins l'une des revendications précédentes, comprenant :

- une unité de génération de signaux, laquelle est conçue pour la génération des signaux électriques ($s_1$, $s_2$) ;
- une unité d'antenne, laquelle est conçue pour l'émission des signaux micro-ondes ($S_1$, $S_2$) et pour la réception des signaux d'écho ($E_1$, $E_2$),
- un mélangeur, lequel est conçu pour le mélange des signaux électriques ($s_1$, $s_2$, $\theta_1$, $\theta_2$), et
- une unité d'exploitation, laquelle est conçue pour la détermination du niveau (L) et pour la vérification de la capacité de fonctionnement du transmetteur de niveau.

**10.** Transmetteur de niveau selon la revendication 9, pour lequel l'unité d'exploitation (6) comprend un filtre passe-bande, qui laisse passer les fréquences ($f_1$, $f_2$) des signaux de différence ($ZF_1$, $ZF_2$).

**11.** Transmetteur de niveau selon la revendication 9 ou 10, pour lequel l'unité d'exploitation (6) comprend un amplificateur pour l'amplification des signaux de différence ($ZF_1$, $ZF_2$).

# Fig. 1

## Fig. 2a

## Fig. 2b

# Fig. 3a

# Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013092099 A1
- WO 2010034574 A
- WO 2012139852 A1